# EUROPEAN PATENT APPLICATION

(11) **EP 4 148 713 A1**
(43) Date of publication of application: **15.03.2023**
(21) Application number: 21943316.6
(22) Date of filing: 30.08.2021
(51) Int. Cl.: G09F 9/30

(54) **FLEXIBLE SCREEN PULL-OUT ASSEMBLY AND DISPLAY APPARATUS**

(30) Priority: 30.06.2021 CN 202110732789
(71) Applicant: Wuxi Wingtech Information Technology Co., Ltd, Wuxi, Jiangsu 214145 (CN)
(72) Inventor: ZHOU, Yunhao, Jiangsu 214145 (CN)
(74) Representative: Grünecker Patent- und Rechtsanwälte PartG mbB
(86) International application number: PCT/CN2021/115430
(87) International publication number: WO 2023/272921

(57) **Abstract**

A flexible screen withdrawing assembly and a display device (10). The flexible screen withdrawing assembly comprises a base (2) slidably connected to a frame (1) of a display device (10); a sliding component (4) connected to a moving end of a flexible screen (3); a gear assembly (5) connecting the base (2) and the frame (1), wherein the gear assembly (5) comprises a gear component (51) rotatably connected to the base (2), a first rack (52) connected to the frame (1), and a second rack (53) connected to the sliding component (4); the first rack (52) and the second rack (53) are both engaged with the gear component (51); and the tensioning assembly (6) abuts against the sliding component (4). During the extension and retraction of the gear assembly (5), the tensioning assembly (6) is kept abutting against the sliding component (4), so as to eliminate the vacancy between the second rack (53) and the gear component (51), ensure the stability of the movement of the sliding component (4), and effectively avoid the problems of unevenness, shaking and screen skew of the flexible screen (3) during the extension and retraction. It ensures the stability of the flexible screen (3) during the extension and retraction, and improves the use experience of the display device (10).

## Description

This disclosure claims priority to Chinese Patent Application No. 202110732789.X, entitled "Flexible screen withdrawing assembly and display device", filed on June 30, 2021 to China Patent Office, the entire contents of which are incorporated herein by reference.

### TECHNICAL FIELD

The present disclosure relates to a flexible screen withdrawing assembly and a display device.

### BACKGROUND

At present, in the extension and retraction process of flexible screen of intelligent terminal, there are some problems in the moving area, such as uneven screen surface and screen skew, which affect the appearance of the whole machine and user experience. For example, the driving assembly for driving the flexible screen to extend and retract includes a gear assembly. When the gear assembly is engaged, there is a vacancy, which is very likely to cause the display device to shake when the flexible screen is stretched, thus causing the problem that the screen surface is uneven and the screen is skewed.

### SUMMARY

### (1) The technical problem to be solved

When the gear assembly is engaged, there is a vacancy, which is very likely to cause the display device to shake when the flexible screen is stretched, thus causing the problem that the screen surface is uneven and the screen is skewed.

### (II) Technical solutions

According to various embodiments of the present disclosure, a flexible screen withdrawing assembly and a display device are provided.

A flexible screen withdrawing assembly includes:
a base configured to be slidably connected to a frame of a display device;
a sliding component configured to be connected to a moving end of a flexible screen;
a gear assembly configured to connect the base and the frame, wherein the gear assembly includes a gear component configured to be rotatably connected with the base, a first rack configured to be connected with the frame, a second rack configured to be connected with the sliding component; the first rack and the second rack are both engaged with the gear component; and
a tensioning assembly connected to the base and abutting against the sliding component for applying a force to the sliding component in a direction opposite to a movement direction of the sliding component.

As an alternative to the embodiments of the present disclosure, the tensioning assembly includes a sliding rail assembly arranged on a side of the base facing towards the sliding component and a sliding assembly arranged on the sliding component.

As an alternative embodiment to the embodiments of the present disclosure, the sliding rail assembly includes an arcuate track and the sliding assembly includes a sliding block configured to mate with a convex surface of the arcuate track.

As an alternative to the embodiments of the present disclosure, the sliding assembly further includes a resilient component configured to be connected with the sliding block, the resilient component abutting against the sliding component.

As an alternative to the embodiments of the present disclosure, the sliding assembly includes a connecting plate provided on a side of the sliding component and configured to load and install the resilient component and the sliding block.

As an alternative to the embodiments of the present disclosure, the connecting plate is provided with a slot in a direction parallel to the extension direction of the sliding component, the sliding block cooperating with the slot.

As an alternative to the embodiments of the present disclosure, the resilient component includes a torsion spring, one end of the torsion spring being connected to the sliding block and the other end of the torsion spring being connected to the connecting plate; and the torsion spring is configured such that a middle portion of the torsion spring abuts against the sliding component.

As an alternative to the embodiments of the present disclosure, the sliding rail assembly further includes a limit portion.

As an alternative to the embodiments of the present disclosure, both ends of the arcuate track are provided with the limit portion.

As an alternative to the embodiments of the present disclosure, the base is provided with a first sliding mating portion, and the sliding component is provided with a second sliding mating portion configured for sliding fit with the first sliding mating portion.

As an alternative to the embodiments of the present disclosure, the mating surface of at least one of the first sliding mating portion and the second sliding mating portion includes a layer of self-lubricating material.

As an alternative to the embodiments of the present disclosure, the layer of self-lubricating material includes nylon.

As an alternative to the embodiments of the present disclosure, a side of the arcuate track facing away from the convex surface forms a plane, and a side of the connecting plate facing towards the base is provided with a limit stop which abuts against the plane.

As an alternative to the embodiments of the present disclosure, the limit stop is a nylon ring.

As an alternative to the embodiments of the present disclosure, a pressure plate is further included, the pressure plate being arranged on a side of the gear assembly facing away from the base.

As an alternative to the embodiments of the present disclosure, the pressure plate is rotatably connected to the gear component.

A display device includes the flexible screen withdrawing assembly as described above.

Additional features and advantages of the disclosure will be set forth in the description which follows, and in part will be apparent from the description, or may be learned by practice of the disclosure. The objectives and other advantages of the disclosure will be realized and attained by the structure particularly pointed out in the description and the claims as well as the accompanying drawings. The details of one or more embodiments of the disclosure are set forth in the following drawings and description.

The above objects, features and advantages of the present disclosure will be described in details from the following detailed description of preferred embodiments thereof, when taken in conjunction with the accompanying drawings.

### BRIEF DESCRIPTION OF THE DRAWINGS

In order to explain the embodiments of the present disclosure or the technical solutions in the prior art more clearly, the following simple description will be given to the drawings which are used in the embodiments or the description of the prior art. It would be obvious for a person skilled in the art to obtain other drawings according to these drawings without involving any inventive effort.
Fig. 1 is a structure diagram of a flexible screen withdrawing assembly provided according to one or more embodiments of the present disclosure;
Fig. 2 is a structure diagram of a gear assembly provided according to one or more embodiments of the present disclosure;
Fig. 3 is a structure diagram of a withdrawing process for a flexible screen withdrawing assembly according to one or more embodiments of the present disclosure;
Fig. 4 is a diagram of a flexible screen withdrawing assembly pulled to an extreme position according to one or more embodiments of the present disclosure;
Fig. 5 is an exploded view of a tensioning assembly according to one or more embodiments of the present disclosure;
Fig. 6 is an exploded view of a display device according to one or more embodiments of the present disclosure;
Fig. 7 is a diagram of a sliding component and a base sliding fit structure according to one or more embodiments of the present disclosure;
Fig. 8 is a diagram of a display device according to one or more embodiments of the present disclosure prior to deployment;
Fig. 9 is a diagram of a display device according to one or more embodiments of the present disclosure after deployment.

### DETAILED DESCRIPTION OF THE INVENTION

In order that the above-recited objects, features and advantages of the present disclosure may be more clearly understood, a further description of the aspects of the present disclosure is provided below. It should be noted that embodiments of the present disclosure and features of the embodiments may be combined with each other without conflicts.

In the following description, numerous specific details are set forth in order to provide a thorough understanding of the present disclosure, but the present disclosure may be practiced otherwise than as specifically described herein. It is obvious that the embodiments in the description are only a few embodiments of the present disclosure, not all embodiments.

The terms "first" and "second" and the like in the description and in the claims of the present disclosure are used for distinguishing different objects and not for describing a particular sequence of objects. For example, the first camera and the second camera are intended to distinguish different cameras and not to describe a particular sequence of cameras.

In the embodiments of the disclosure, the words "exemplary" or "such as" are used for serving as an example, instance, or illustration. Any embodiment or design described herein as "exemplary" or "for example" is not necessarily to be construed as preferred or advantageous over other embodiments or designs. Rather, the use of the words "exemplary" or "such as" is intended to present concepts in a specific manner. Furthermore, in the description of the embodiments of the present disclosure, the meaning of "a plurality of" means two or more unless otherwise indicated.

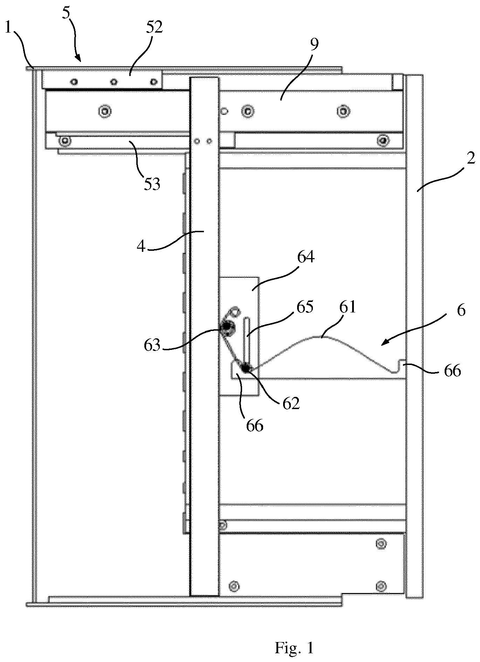

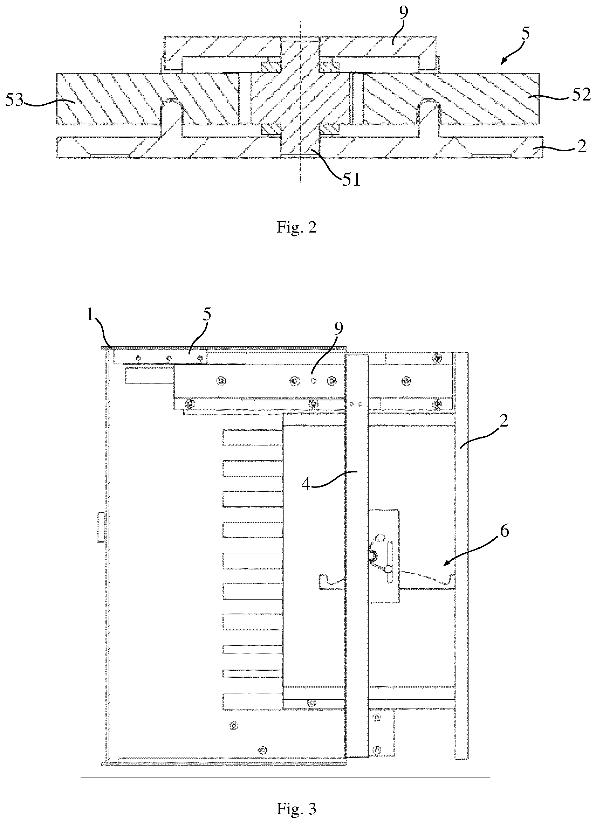

Fig. 1 is a structure diagram of a flexible screen withdrawing assembly according to an embodiment of the present disclosure. Fig. 2 is a structure diagram of a gear assembly according to an embodiment of the present disclosure. As shown in Figs. 1-2, embodiments of the present disclosure provide a flexible screen withdrawing assembly including:
a base 2 configured to be slidably connected to a frame 1 of a display device 10;
a sliding component 4 configured to be connected to a moving end of a flexible screen 3;
a gear assembly 5 configured to connect the base 2 and the frame 1, wherein the gear assembly 5 includes a gear component 51 configured to be rotatably connected to the base 2, a first rack 52 configured to be connected to the frame 1, and a second rack 53 configured to be connected to the sliding component 4; the first rack 52 and the second rack 53 are both engaged with the gear component 51; and
a tensioning assembly 6 connected to the base 2 and abutting against the sliding component 4 for applying a force to the sliding component 4 in a direction opposite to the movement direction of the sliding component 4.

The embodiment of the present disclosure provides a flexible screen withdrawing assembly including a base 2 slidably connected to a frame 1 of a display device 10, a sliding component 4 configured to be connected to a moving end of a flexible screen 3, a gear assembly 5 configured to connect the sliding component 4 and the base 2, and a tensioning assembly 6 abutting against the sliding component 4 to ensure stable movement of the sliding component 4. The first rack 52 in the gear assembly 5 is connected to the frame 1 of the display device 10, so that the first rack 52 forms a fixed end of the gear assembly 5. Since the base 2 is rotatably connected to the gear component 51, the base 2 moves in a direction away from the first rack 52 under the action of an external force, so that the gear component 51 rotates in the direction of its own axis. The second rack 53 moves in a direction away from the first rack 52 under the action of the rotation of the gear component 51, so that the gear assembly 5 is stretched, and the flexible screen 3 is unfolded to increase the display area of the display space of the display device 10. By the same reasoning, when the base 2 moves towards the first rack 52 under the action of an external force, the gear component 51 rotates to drive the second rack 53 to move in a direction close to the first rack 52, so that the gear assembly 5 retracts and withdraws the flexible screen 3, so as to reduce the display area of the display space of the display device 10, thereby adjusting the display area of the display device 10. During the extension and retraction of the gear assembly 5, the tensioning assembly 6 is kept abutting against the sliding component 4 so as to eliminate the vacancy between the second rack 53 and the gear component 51, ensure the stability of the movement of the sliding component 4, and effectively avoids the problems of unevenness, shaking and screen skew of the flexible screen 3 during the extension and retraction. Thereby, it ensures the stability of the flexible screen 3 during the extension and retraction, and improves the use experience of the display device 10.

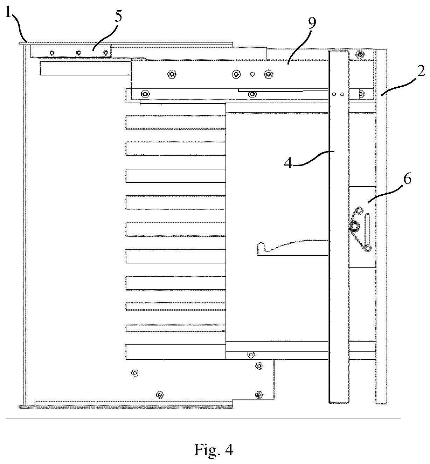

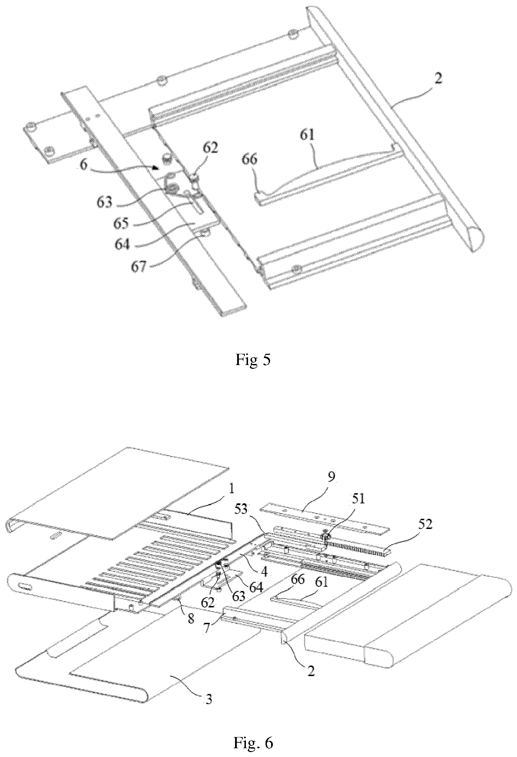

Fig. 3 is a structure diagram of a withdrawing process of a flexible screen withdrawing assembly according to an embodiment of the present disclosure. Fig. 4 is a diagram of a flexible screen withdrawing assembly pulled to an extreme position according to an embodiment of the present disclosure. Fig. 5 is an exploded view of a tensioning assembly according to an embodiment of the present disclosure. Fig. 6 is an exploded view of ae display device according to an embodiment of the present disclosure. As shown in Figs. 3-6, in some embodiments, the tensioning assembly 6 includes a sliding rail assembly arranged on a side of the base 2 facing towards the sliding component 4 and a sliding assembly arranged on the sliding component 4. The sliding rail assembly includes an arcuate track 61. The sliding assembly includes a sliding block 62 configured to mate with a convex surface of the arcuate track 61 and a resilient component 63 configured to be connected with the sliding block 62. The resilient component 63 abuts against the sliding component 4.

The above-mentioned tensioning assembly 6 includes a sliding rail assembly and a sliding assembly. The sliding rail assembly is provided on the base 2. The sliding assembly is provided on the sliding component 4, and the sliding assembly cooperates with the sliding rail assembly so as to realize the abutment of the tensioning assembly 6 and the sliding component 4.

Specifically, since the sliding block 62 cooperates with the convex surface of the arcuate track 61, during the deployment of the flexible screen 3, the sliding component 4 applies a force to the sliding block 62 along the movement direction of the sliding component 4, so that the sliding block 62 abuts against the arcuate track 61. The arcuate track 61 generates a force on the sliding block 62 in a direction opposite to the movement direction of the sliding component 4, and the force is transmitted to the resilient component 63 via the sliding block 62, so that the resilient component 63 abuts against the sliding component 4, and applies a force on the sliding component 4 in a direction opposite to the movement direction of the sliding component 4. Thus, teeth in the second rack 53 configured to drive the movement of the sliding component 4 are brought into close mesh with teeth in the gear component 51, so that the effect of eliminating the vacancy is achieved.

When the sliding block 62 reaches the top position of the arcuate track 61, the force generated by the abutment of the arcuate track 61 with the sliding block 62 disappears. Then, the sliding block 62 continues to slide along the arcuate track 61. Since the force generated between the arcuate track 61 and the sliding block 62 in a direction opposite to the sliding direction of the sliding component 4 disappears, the sliding block 62 can slide along the arcuate track 61 to an end of the arcuate track 61 without being subjected to an external force, thereby achieving automatic development of the flexible screen 3.

In some embodiments, the sliding assembly includes a connecting plate 64 provided on a side of the sliding component 4 and configured to load and install the resilient component 63 and the sliding block 62. The connecting plate 64 is provided with a slot 65 in a direction parallel to the extension direction of the sliding component 4, the sliding block 62 cooperating with the slot 65.

In the above-mentioned sliding assembly, the direction of movement of the sliding block 62 on the connecting plate 64 is limited by providing the slot 65 on the connecting plate 64. During the movement of the sliding block 62 along the arcuate track 61, the sliding block 62 moves along the direction of the slot 65 on the connecting plate 64, so that the resilient component 63 connected to the sliding block 62 is further compressed. When the sliding block 62 moves to the top of the arcuate track 61, the sliding block 62 can move to the bottom of the arcuate track 61 in the direction of the slot 65 and the direction of the sliding rail under the action of the restoring force generated by the resilient component 63, thereby realizing the automatic development of the flexible screen 3.

Specifically, the resilient component 63 includes a torsion spring, one end of the torsion spring being connected to the sliding block 62 and the other end of the torsion spring being connected to the connecting plate 64. The torsion spring is configured such that the middle portion of the torsion spring abuts against the sliding component 4.

By providing a torsion spring, one end of the torsion spring is provided with the sliding block 62, and the other end is connected to the connecting plate 64. During the movement of the sliding block 62, the torsion spring is compressed, so that the main body portion of the torsion spring is kept abutting against the sliding component 4, thereby ensuring the stability of the movement of the sliding component 4.

In some embodiments, a side of the arcuate track 61 facing away from the convex surface forms a plane. A side of the connecting plate 64 facing towards the base 2 is provided with a limit stop 67 which cooperates with the plane. During the movement of the sliding component 4, the limit stop 67 abuts against the above-mentioned plane and moves along the plane, so as to ensure the stable movement of the sliding component 4 in a linear direction, and to prevent the movement direction of the sliding component 4 from shifting when the sliding block 62 is acted on by the convex surface of the arc-shaped guide rail.

Specifically, the limit stop 67 is a nylon ring.

In some embodiments, the sliding rail assembly further includes a limit portion 66 provided at both ends of the arcuate track 61.

Both ends of the above-mentioned arcuate track 61 are provided with the limit portion 66, so as to realize a limiting function on the initial position and the end position of the sliding block 62, and effectively prevent the sliding rail assembly of the sliding block 62 from being disengaged.

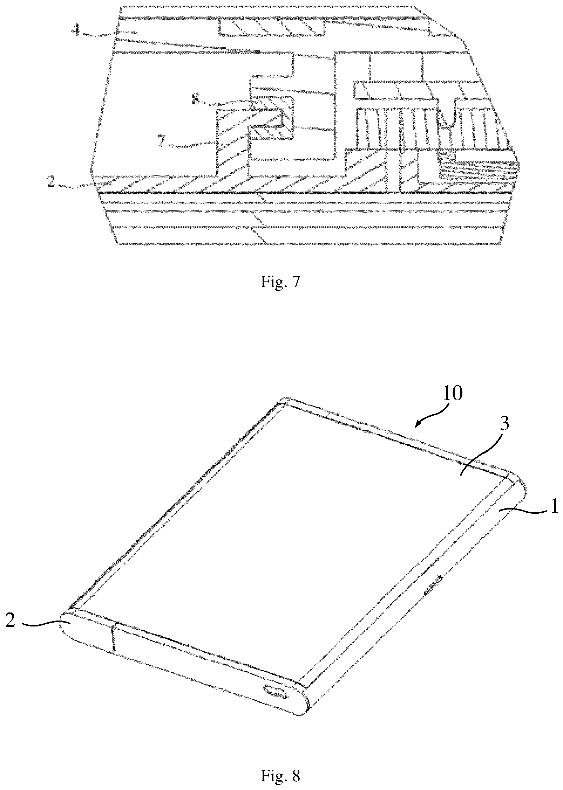

Fig. 7 is a diagram of a sliding component and a base sliding fit structure according to an embodiment of the present disclosure. As shown in Fig. 7, in some embodiments, the base 2 is provided with a first sliding mating portion 7, and the sliding component 4 is provided with a second sliding mating portion 8 configured for sliding fit with the first sliding mating portion 7.

The first sliding mating portion 7 is provided on the base 2, and the second sliding mating portion 8 is provided on the sliding component 4, so as to achieve a sliding connection between the sliding component 4 and the base 2. Thus, it achieves the limitation of the relative movement direction between the sliding component 4 and the base 2, ensures that the movement direction of the base 2 is consistent with that of the sliding component 4, thereby ensuring the stability of the movement direction when the flexible screen 3 is deployed or retracted.

In some embodiments, the mating surface of at least one of the first sliding mating portion 7 and the second sliding mating portion 8 includes a layer of self-lubricating material.

By providing the self-lubricating material layer, the sliding friction force between the sliding component 4 and the base 2 can be effectively reduced, the smooth sliding between the sliding component 4 and the base 2 can be ensured, and the noise generated by the friction between the base 2 and the sliding component 4 during the deployment or retraction of the flexible screen 3 can be reduced.

In particular, the layer of self-lubricating material may include nylon.

In some embodiments, it further includes a pressure plate 9 arranged on a side of the gear assembly 5 facing away from the base 2 and rotatably connected to the gear component 51.

By providing the pressure plate 9, the gear assembly 5 is protected.

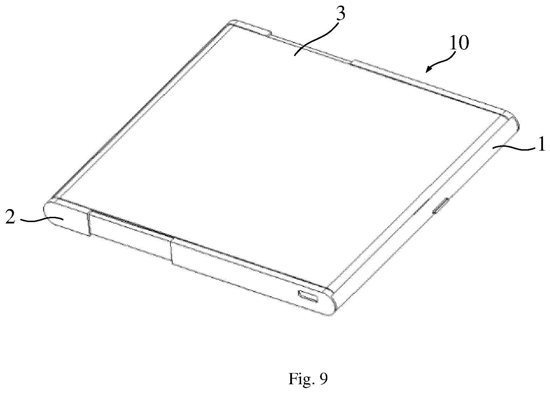

Fig. 8 is a diagram of a display device according to an embodiment of the present disclosure prior to deployment, and Fig. 9 is a diagram of a display device according to the embodiment of the present disclosure after deployment. As shown in Figs. 1-9, in an embodiment, a display device 10 is provided that includes the flexible screen withdrawing assembly described above.

An embodiment of the present disclosure provides a display device 10, including a frame 1 and a base 2 slidably connected to the frame 1. The base 2 generates relative sliding with respect to the frame 1, and drives a gear assembly 5 and a sliding component 4 configured to be connected to a moving end of a flexible screen 3 to move, thereby adjusting the display area of the flexible screen 3. Furthermore, by providing the tensioning assembly 6, the stability of the movement of the flexible screen 3 is improved, thereby improving the stability of the use of the display device 10, as well as the use experience.

Various technical features of the above-mentioned embodiments can be combined in any combination. In order to make the description concise, not all the possible combinations of each technical feature in the above-mentioned embodiments are described. However, as long as there is no contradiction between the combinations of these technical features, they should be considered as within the scope of the description.

The above-mentioned embodiments are indicative of only a few embodiments of the present disclosure, which are described specifically and in detail, but are not to be construed as limiting the scope of the invention. It should be noted that several variations and modifications can be made by one skilled in the art without departing from the spirit of the present disclosure, and all belong to the scope of the present disclosure. Accordingly, the protection scope of the disclosed patent shall be subject to the attached claims.

### Industrial Applicability

The flexible screen withdrawing assembly disclosed in the present disclosure can effectively eliminate the vacancy between the second rack 53 and the gear component 51, ensure the stability of the movement of the sliding component 4, and effectively avoids the problems of unevenness, shaking and screen skew of the flexible screen 3 during the extension and retraction. Thereby, it ensures the stability of the flexible screen 3 during the extension and retraction, improves the use experience of the display device 10, and has strong industrial applicability.

## Claims

1. A flexible screen withdrawing assembly, comprising:
a base (2) configured to be slidably connected to a frame (1) of a display device (10);
a sliding component (4) configured to be connected to a moving end of a flexible screen (3);
a gear assembly (5) configured to connect the base (2) and the frame (1), wherein the gear assembly (5) comprises a gear component (51) rotatably connected to the base (2), a first rack (52) configured to be connected to the frame (1), and a second rack (53) configured to be connected to the sliding component (4); the first rack (52) and the second rack (53) are both engaged with the gear component (51); and
a tensioning assembly (6) connected to the base (2) and abutting against the sliding component (4) for applying a force to the sliding component (4) in a direction opposite to a movement direction of the sliding component (4).

2. The flexible screen withdrawing assembly according to claim 1, wherein the tensioning assembly (6) comprises a sliding rail assembly arranged on a side of the base (2) facing towards the sliding component (4) and a sliding assembly arranged on the sliding component (4).

3. The flexible screen withdrawing assembly according to claim 2, wherein the sliding rail assembly comprises an arcuate track (61) and the sliding assembly comprises a sliding block (62) configured to mate with a convex surface of the arcuate track (61).

4. The flexible screen withdrawing assembly according to claim 3, wherein the sliding assembly further comprises a resilient component (63) configured to be connected with the sliding block (62), the resilient component (63) abutting against the sliding component (4).

5. The flexible screen withdrawing assembly according to claim 4, wherein the sliding assembly comprises a connecting plate (64) provided on a side of the sliding component (4) and configured to load and install the resilient component (63) and the sliding block (62).

6. The flexible screen withdrawing assembly according to claim 5, wherein the connecting plate (64) is provided with a slot (65) in a direction parallel to the extension direction of the sliding component (4), the sliding block (62) cooperating with the slot (65).

7. The flexible screen withdrawing assembly according to claim 5, wherein the resilient component (63) comprises a torsion spring, one end of the torsion spring being connected to the sliding block (62) and the other end of the torsion spring being connected to the connecting plate (64); and the torsion spring is configured such that a middle portion of the torsion spring abuts against the sliding component (4).

8. The flexible screen withdrawing assembly according to claim 4, wherein the sliding rail assembly further comprises a limit portion (66).

9. The flexible screen withdrawing assembly according to claim 8, wherein both ends of the arcuate track (61) are provided with the limit portion (66).

10. The flexible screen withdrawing assembly according to claim 6, wherein the base (2) is provided with a first sliding mating portion (7), and the sliding component (4) is provided with a second sliding mating portion (8) configured for sliding fit with the first sliding mating portion (7).

11. The flexible screen withdrawing assembly according to claim 10, wherein the mating surface of at least one of the first sliding mating portion (7) and the second sliding mating portion (8) comprises a layer of self-lubricating material.

12. The flexible screen withdrawing assembly according to claim 11, wherein the layer of self-lubricating material comprises nylon.

13. The flexible screen withdrawing assembly according to claim 4, wherein a side of the arcuate track (61) facing away from the convex surface forms a plane, and a side of the connecting plate (64) facing towards the base (2) is provided with a limit stop (67) which abuts against the plane.

14. The flexible screen withdrawing assembly according to claim 13, wherein the limit stop (67) is a nylon ring.

15. The flexible screen withdrawing assembly according to claim 1, further comprising a pressure plate (9) arranged on a side of the gear assembly (5) facing away from the base (2).

16. The flexible screen withdrawing assembly according to claim 15, wherein the pressure plate (9) is rotatably connected to the gear component (51).

17. A display device, comprising the flexible screen withdrawing assembly according to any one of claims 1 to 16.
